# FASCICULE DE BREVET EUROPEEN

(11) **EP 1 327 294 B1**
(45) Date de publication et mention de la délivrance du brevet: **17.08.2005**
(21) Numéro de dépôt: 01978552.6
(22) Date de dépôt: 17.10.2001
(51) Int. Cl.: H02K 5/24

(54) **MOTEUR ELECTRIQUE A ISOLATION ACOUSTIQUE**
SCHALL ISOLIERTE ELEKTRISCHE MASCHINE
ELECTRIC MOTOR WITH ACOUSTIC INSULATION

(30) Priorité: 20.10.2000 FR 0013498
(43) Date de publication de la demande: 16.07.2003
(73) Titulaire: LOHR INDUSTRIE, 67980 Hangenbieten (FR)
(72) Inventeur: ANDRE, Jean-Luc, F-67210 Obernai (FR)
(74) Mandataire: Metz, Paul
(86) Numéro de dépôt international: PCT/FR2001/003213
(87) Numéro de publication internationale: WO 2002/033806

(56) Documents cités:
- EP-A- 0 268 716
- DE-A- 19 901 104

## Description

La présente invention se rapporte à un moteur électrique à isolation acoustique, notamment un moteur électrique du type à rotor extérieur entourant le stator.

Les moteurs électriques sont réputés pour leur couple important et leur rendement énergétique de valeur élevée.

Il en est ainsi du moteur électrique à rotor extérieur entourant le stator dont la valeur du rendement dépasse la moyenne.

Pour cette raison, mais aussi pour son moindre encombrement et son caractère non polluant, il est préféré dans le domaine des transports et notamment celui des transports collectifs urbains.

Pour cette raison supplémentaire, les constructeurs de bus, de tramways et d'autres véhicules de transport en commun susceptibles de fonctionner à l'énergie électrique, seront tentés d'équiper ces véhicules de ce type de moteurs électriques à rotor extérieur.

Malheureusement, ses hautes performances et qualités sont entachées d'un défaut sensible en matière de transport. Il s'agit de son bruit de fonctionnement aux vitesses d'exploitation. Ce bruit représente une pollution sonore. Il est jugé excessif pour une utilisation en environnement urbain.

Le doument EP-A 0 268 716 décrit un dispositif d'amortissement du bruit de fonctionnement pour un moteur électrique classique du genre mentionné ci-dessus.

L'invention a donc pour but de réduire sensiblement le bruit de fonctionnement de ces moteurs électriques aux vitesses d'exploitation par une solution efficace, techniquement simple et facile à mettre en oeuvre.

Ce but est résolu par le moteur électrique présentant les caractéristiques énoncées à la partie Caractérisante de la revendication 1.

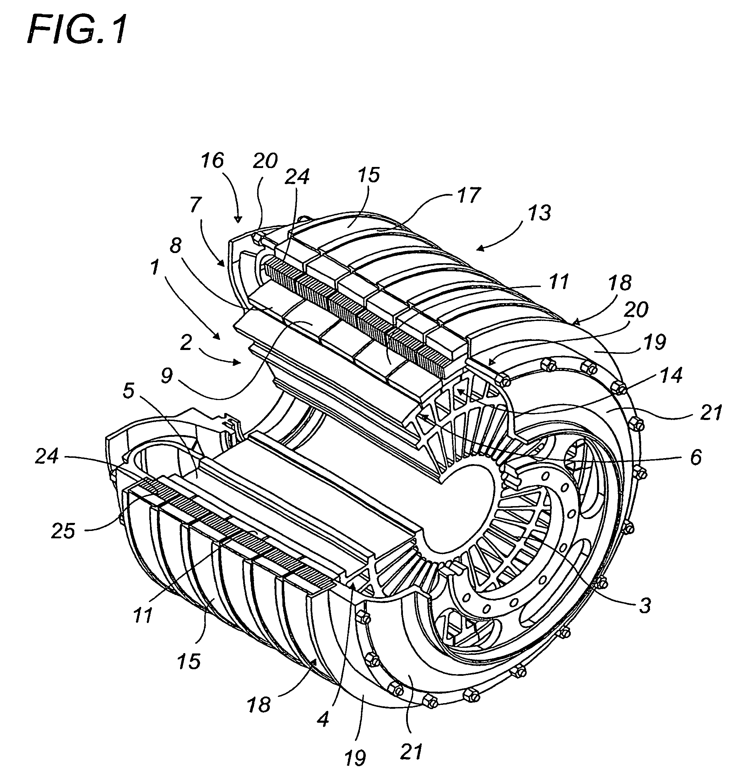

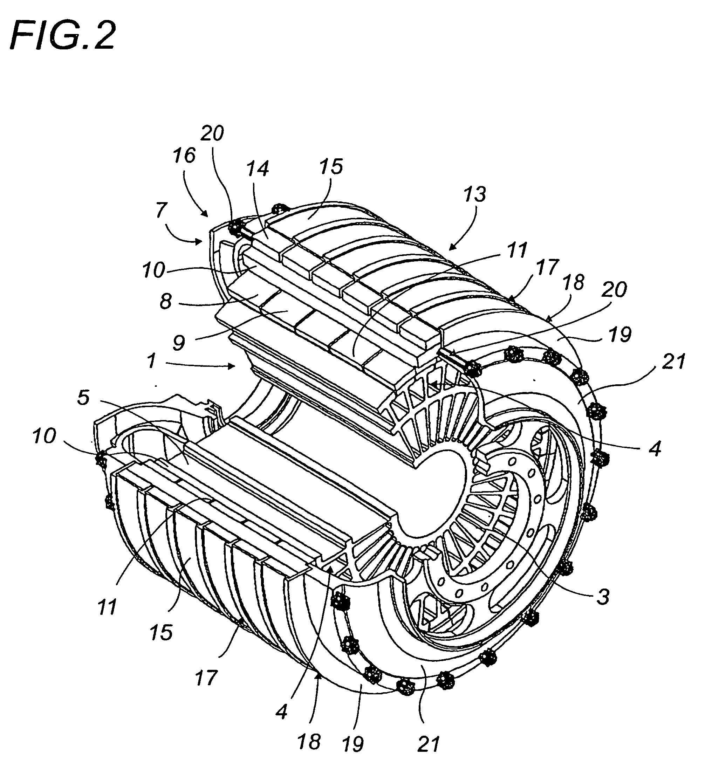

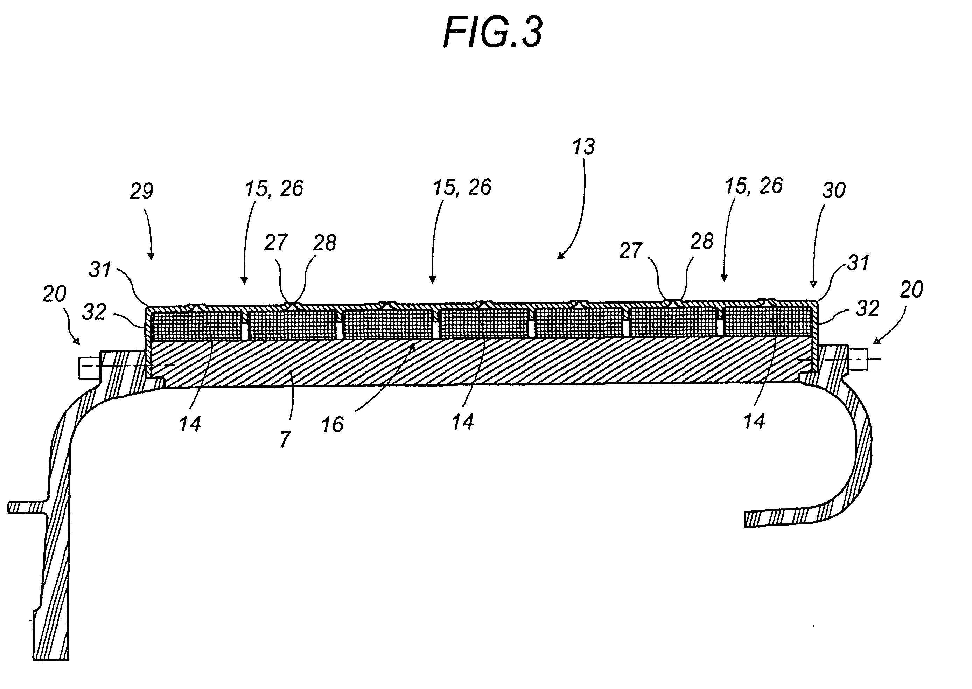

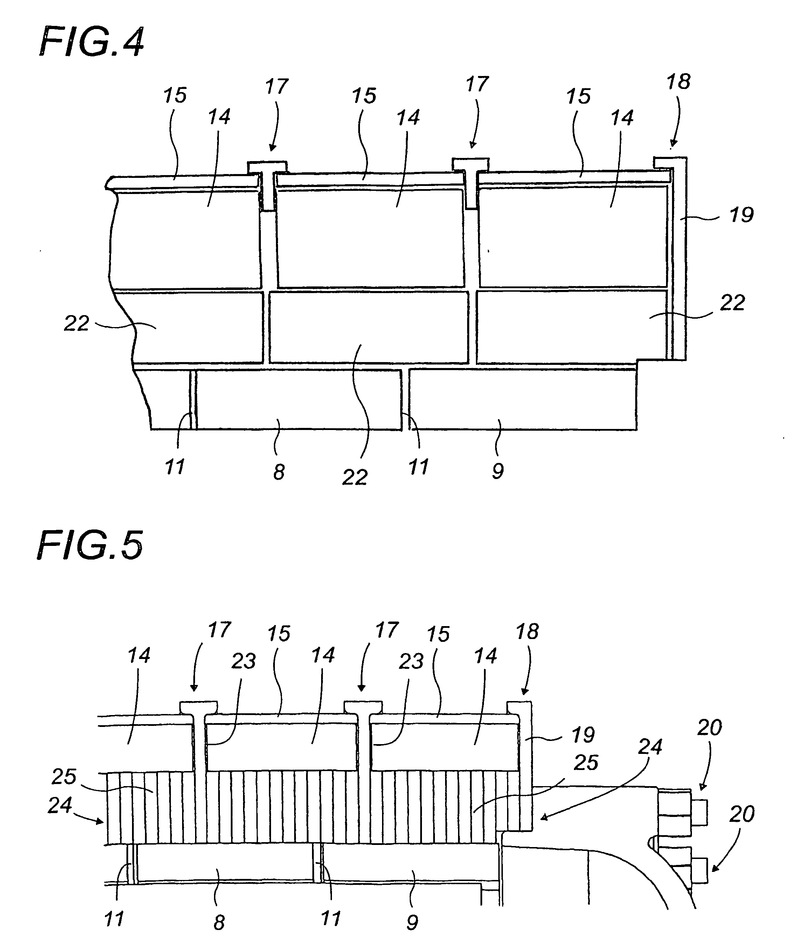

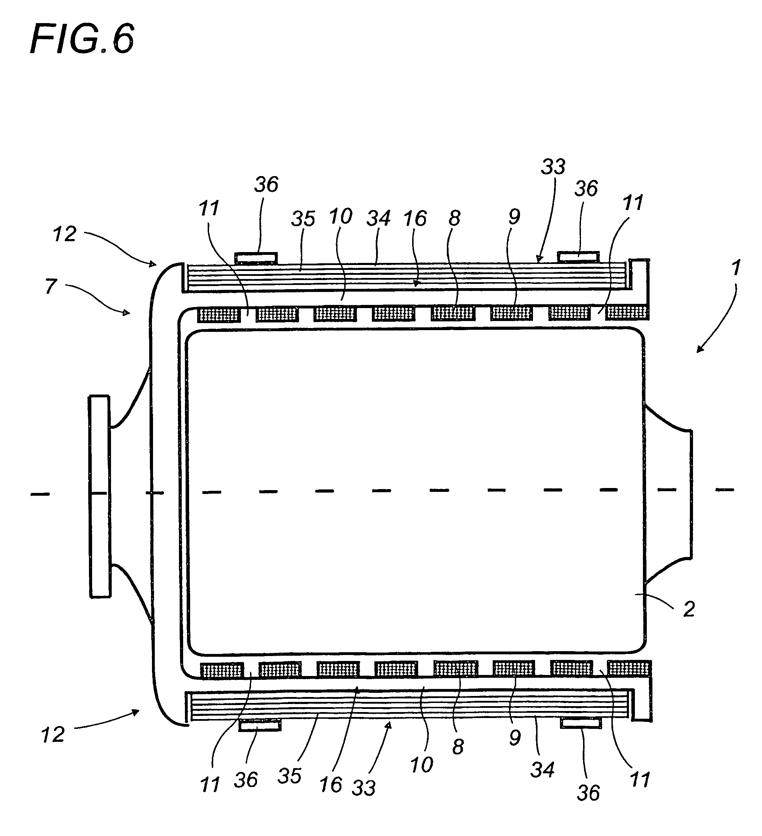

D'autres avantages de l'invention apparaîtront dans la description qui suit, donnée à titre d'exemple et accompagnée des dessins qui représentent :
. la figure 1 : une vue d'ensemble en perspective d'un moteur électrique à rotor extérieur au stator avec partie sectionnée montrant sa composition interne selon une première variante,
. la figure 2 : une vue d'ensemble en perspective d'un moteur électrique à rotor extérieur au stator avec partie sectionnée montrant sa composition interne selon une deuxième variante,
. la figure 3 : une vue en demi coupe axiale au niveau de la partie supérieure montrant un système d'immobilisation des coussinets d'isolation acoustique autour du rotor,
. les figures 4 et 5 : des vues schématiques partielles en demi coupe axiale de deux variantes de construction de rotors avec isolation intégrée respectivement à tronçons juxtaposés et à structure lamellaire,
. la figure 6 : une vue en coupe longitudinale du moteur électrique selon une variante à isolation par enroulement d'un feuillard métallique ou de feuilles métalliques superposées.

En vue de réaliser une atténuation acoustique efficace du bruit de fonctionnement d'un moteur électrique et notamment d'un moteur électrique à rotor extérieur entourant le stator, la solution générale inventive selon la présente invention consiste à déplacer la fréquence propre de résonance de l'ensemble mécanique tout en dégradant sur la plage critique des fréquences audibles l'énergie mécanique par des microdéplacements de friction et ceci dans une structure périphérique extérieure entourant le rotor de transformation de l'énergie mécanique acoustique en chaleur.

A cet effet, on entoure le corps du rotor extérieur par une structure de transformation de l'énergie mécanique des vibrations en chaleur constituant une isolation acoustique pour le bruit propre du moteur dans la bande des fréquences audibles.

Cette isolation acoustique périphérique est une barrière périmétrique appelée ci-après bouclier périphérique sous la forme par exemple d'une jaquette, d'un matelas ou plus généralement d'une structure continue ou discontinue, simple ou composite entourant la surface latérale extérieure du rotor.

Ce bouclier peut comporter par exemple des coussins individuels d'isolation acoustique juxtaposés recouverts d'une enveloppe métallique composite d'immobilisation, de protection, de compression et d'évacuation de la chaleur vers l'extérieur.

Le moteur électrique isolé acoustiquement selon l'invention est de préférence un moteur électrique à rotor extérieur au stator et à aimants permanents ou à excitation. Le moteur électrique de ce type représenté sur les figures se compose des principaux organes et éléments suivants.

Un stator 1 est formé d'un corps central 2. Il s'agit d'un corps creux traversé par des canaux de refroidissement tels que 3. La partie centrale de ce corps est entourée d'une structure périphérique creuse de bobinage 4 présentant des canaux axiaux de bobinage 5 du stator 1 séparés par des pièces longitudinales profilées en T délimitant entre elles à leur partie supérieure des fentes longitudinales 6.

Autour de ce corps central 2 se développe un rotor 7 monté sur roulements (non représentés) constitué d'une succession de blocs d'aimants permanents tels que 8 et 9 d'aimantation alternativement opposée, collés à un bloc mécanique métallique périphérique tubulaire 10, massique, fractionné ou lamellaire formant avec les aimants 8 et 9 le corps du rotor 7. Les blocs d'aimants permanents 8 et 9 s'étendent longitudinalement et sont isolés par des séparateurs intercalaires longitudinaux non magnétiques 11.

L'ensemble est entouré d'un bouclier périphérique d'isolation acoustique 12 apportant l'insonorisation souhaitée par dégradation de l'énergie mécanique acoustique en chaleur. Ce bouclier d'isolation acoustique 12 est maintenu et protégé par une enveloppe extérieure 13 métallique composite formée de plusieurs pièces dont des bandes latérales de tôle maintenues par des cerclages ou ceinturages extérieurs. Ce bouclier peut être formé par exemple de bandes 14 ou de rangées de blocs 14 d'isolation acoustique montées chacune entre d'une part des segments annulaires de maintien et de compression 15 en bande métallique et d'autre part la surface latérale extérieure 16 du rotor 7 comme le montrent les figures.

On décrira maintenant la composition des diverses structures de dégradation de l'énergie des vibrations mécaniques données à titre d'exemples non limitatifs.

Il s'agit de structures ou de matériaux permettant la dégradation par friction de la majorité de l'énergie acoustique en chaleur, notamment celle située dans la bande des fréquences audibles.

On envisage d'une part des structures lamellaires constituées d'une pluralité de lames ou de feuilles superposées. Ces lames ou feuilles sont animées de microdéplacements dus aux vibrations acoustiques qui se transmettent jusqu'à elles. Les microdéplacements engendrent des frictions à sec car ces structures sont superposées à plat.

On envisage d'autre part un matériau conformé par compression de précontrainte en bandes épaisses, en paquets, en blocs, en coussins ou coussinets ou autre forme physique à face frontale plane ou aplatie. Le matériau d'isolation acoustique consiste en une masse de fils, filaments, brins, fibres, lanières, rubans, bandelettes, pailles ou autres conformations plates ou filiformes métalliques, à l'état enchevêtré en contact mutuel de surface permettant aux vibrations acoustiques d'engendrer des microdéplacements de friction en vue de dégrader l'énergie acoustique en la transformant en chaleur. Comme on le verra ci-après, les paquets, blocs ou bandes 14 sont comprimés initialement puis disposés uniformément pour couvrir la totalité de la surface latérale extérieure du rotor réalisant ainsi le bouclier 12 d'isolation acoustique. Ces paquets, blocs ou bandes 14 sont également comprimés contre la surface latérale du rotor par l'enveloppe extérieure composite 13 convenablement ajustée afin d'augmenter la force de friction par laquelle l'énergie mécanique acoustique est dégradée en chaleur.

On envisage également l'utilisation de la friction visqueuse en adoptant des matières ou matériaux résilients pour réaliser la dégradation de l'énergie acoustique. Les formes et la compression seront telles qu'elles favoriseront les effets de friction résiliente à l'intérieur du matériau constitué de ces matières.

La base mécanique du rotor est un corps cylindrique d'une pièce ou fractionnée en plusieurs pièces composantes dont la surface latérale intérieure est garnie des aimants permanents 8 et 9 et sur la surface latérale extérieure 16 de laquelle est rapporté le bouclier périphérique d'isolation acoustique 12.

On décrira tout d'abord les exemples de réalisation dans lesquels on utilise un matériau d'isolation acoustique conformé en blocs, en paquets, en coussins ou coussinets ou en bandes ou autres formes adaptées référencées globalement 14. Ces variantes sont illustrées par les figures 1 à 5.

On comprime le matériau d'isolation acoustique décrit ci-dessus en paquets, blocs ou autres formes adaptées 14 en vue de les appliquer contre la surface latérale extérieure 16 de la base mécanique du rotor pour obtenir l'isolation acoustique désirée.

Les formes adaptées 14 selon lesquelles est conditionné le matériau d'isolation sont posées à plat sur cette surface latérale extérieure 16 puis forcées en appui et pressées contre elle par des moyens d'immobilisation et de maintien qui assurent en plus une fonction de protection et de dissipation thermique.

Les formes adaptées 14 sont disposées en successions linéaires longitudinales et latérales délimitant ainsi des portions annulaires de garnissage périphérique. Ces portions annulaires sont plaquées contre la surface latérale 16 du rotor et recouvertes par les segments annulaires 15 de feuille de tôle immobilisés par des anneaux de maintien tels que 17 ou pièces de cerclage (figures 1 et 2) ajustés pour procurer l'effet de pression nécessaire et de retenue pendant l'utilisation du moteur.

Ces anneaux de maintien ou pièces de cerclage 17 présentent selon le cas une prolongation radiale de cloisonnement réalisant la séparation entre deux portions annulaires de garnissage périphérique et les pièces du rotor et éventuellement les aimants comme on le verra ci-après.

Les extrémités du bouclier 12 sont recouvertes par des anneaux de maintien de chant 18 sous la forme d'un flan annulaire d'extrémité 19 pour former une protection latérale et assurer un maintien latéral.

Des tirants 20 assurent le maintien latéral des pièces constitutives du rotor 7 et de celles de l'enveloppe extérieure composite 13 ainsi que la fixation des flasques tels que 21 des turbines de ventilation fermant latéralement le bloc mécanique du moteur électrique.

On peut envisager une version selon laquelle le corps tubulaire 10 formant la base mécanique du rotor 7 est constitué de segments ou tronçons tubulaires 22 de même longueur que la largeur des garnitures annulaires d'isolation acoustiques (figure 4). Selon cette variante, les anneaux de maintien ou pièces de cerclage 17 s'étendent vers le bas par des prolongations radiales de séparation et de cloisonnement 23 formant rondelles afin d'assurer la séparation de cloisonnement des blocs de matériau d'isolation acoustique 14 et le cas échéant se prolongent encore plus bas pour constituer également une séparation entre les tronçons tubulaires 22.

Cet agencement permet un montage par empilement avec serrage par les tirants 20.

Ce même type de montage et d'arrangement se retrouve dans le cas d'une base mécanique du rotor sous la forme d'une structure lamellaire 24 formée d'un empilement de flans 25 de tôle conformés en rondelles tel que représenté sur la figure 5.

On remarque sur cette figure que les prolongations radiales de séparation 23 des anneaux de maintien ou pièces de cerclage 17 se poursuivent à travers la structure lamellaire 24 du rotor permettant d'individualiser des groupes successifs comprimés par serrage à l'aide des tirants 20.

Cette conformation de structure est également visible sur la figure 1 montrant cet empilement qui forme un bloc de structure lamellaire 24 constituant un nouveau type de rotor.

Selon une variante simplifiée et de construction améliorée, les prolongations 23 des anneaux de maintien ou pièces de cerclage 17 s'étendent moins profondément dans le sens radial et ne comportent qu'une amorce de prolongation. Cet aménagement présente l'avantage de pouvoir habiller le rotor extérieur sans le modifier.

Pour une telle variante représentée sur la figure 3, les segments annulaires de maintien et de couverture de l'enveloppe extérieure 13 sont simplement juxtaposés.

Chaque segment annulaire courant 26 de couverture de l'enveloppe extérieure 13 présente une forme générale annulaire de section en T dont les bords longitudinaux latéraux 27 et 28 sont relevés pour faciliter l'introduction latérale des blocs 14 d'isolation acoustique. Les segments d'extrémité 29 et 30 présentent un épaulement 31 et un retour 32 vers le bas permettant d'habiller les chants supérieurs du bloc moteur et d'assurer la fermeture latérale de la structure d'isolation acoustique. La branche verticale de la forme de section en T limitée à sa longueur minimale assure la séparation latérale entre les rangées de blocs ou les bandes 14 de matériau d'isolation acoustique sur la surface latérale extérieure 16 du rotor 7. Elle assure aussi la compression latérale permanente des blocs ou bandes 14 par serrage latéral à l'aide des tirants 20.

Cette structure et cet agencement permettent un montage rapide et simple du rotor et de son isolation acoustique intégrée.

Le montage s'effectue en enfilant latéralement successivement et alternativement un à un les tronçons tubulaires ou les groupes de flans annulaires et les rangées ou bandes de matériau d'isolation acoustique puis en les poussant latéralement à chaque fois par le prochain tronçon tubulaire 22 ou groupe de flans 25 arrivant jusqu'à la mise en place de tous les éléments constitutifs et donc la transformation des vibrations mécaniques sonores en chaleur.

Le diamètre de ces tronçons tubulaires 22 par rapport à celui de la surface latérale extérieure 16 du rotor est choisi pour assurer une certaine compression permanente des blocs 14 d'isolation acoustique en vue d'améliorer l'effet de friction des fils ou rubans constitutifs du matériau d'isolation.

Les segments annulaires 15 ou 26 de couverture de l'enveloppe extérieure 13 sont métalliques pour assurer une protection mécanique, mais aussi pour évacuer la chaleur vers l'extérieur.

I1 faut bien remarquer que dans les agencements décrits ci-dessus, de nombreuses pièces ne sont pas solidarisées entre elles mais simplement serrées. Dans ces conditions, des microdéplacements relatifs de friction sont possibles ce qui augmente encore la transformation de l'énergie acoustique en chaleur.

Selon une autre variante représentée sur la figure 6, le corps du rotor présente une surface latérale extérieure 16 conformée en plage annulaire en retrait destinée à servir de cavité de réception pour une structure d'isolation acoustique 33 par exemple lamellaire et métallique.

La structure lamellaire métallique 33 peut être constituée, comme représenté, d'un enroulement de plusieurs tours d'un feuillard métallique 34 dont les spires sont jointives. Ces spires subissent ainsi des microdéplacements entre elles pour la dégradation de l'énergie mécanique acoustique en chaleur.

La structure lamellaire et métallique d'isolation acoustique 33 peut aussi bien être formée de plusieurs feuilles ou lames métalliques 35 distinctes et superposées subissant aussi des microdéplacements entre elles.

Le feuillard, les feuilles ou les lames sont maintenus par plusieurs liens périphériques 36 de préférence plats par exemple des sangles, des ceintures, des bandes de cerclage ou tout autre moyen équivalent.

## Revendications

1. Moteur électrique insonorisé du type à rotor extérieur (7) au stator (1) entouré d'une isolation acoustique périphérique extérieure **caractérisé en ce que** l'isolation acoustique extérieure est un bouclier acoustique périphérique (12) entourant la surface latérale extérieure (16) de l'ensemble mécanique du rotor (7) et tournant avec lui, ce bouclier (12) d'isolation acoustique est recouvert d'une enveloppe métallique composite extérieure de protection (13), et formé d'une jaquette ou d'un matelas d'un matériau ou d'une structure d'une seule pièce ou constituée par la juxtaposition d'unités, le matériau ou la structure dégradant en coopération avec les autres pièces du rotor non solidarisées entre elles l'énergie mécanique acoustique en chaleur au moins dans la bande des fréquences audibles en la transformant par friction en chaleur évacuée à l'extérieur par l'enveloppe composite métallique extérieure de protection (13) entourant le bouclier (12) en vue de son maintien, de sa protection, de sa compression et de l'évacuation de la chaleur.

2. Moteur électrique selon la revendication 1 **caractérisé en ce que** la transformation de l'énergie mécanique acoustique en chaleur s'effectue par des frottements de friction consécutifs à des microdéplacements au sein du matériau ou de la structure d'isolation acoustique.

3. Moteur électrique selon la revendication 1 ou 2 **caractérisé en ce que** la friction est une friction sèche.

4. Moteur électrique selon la revendication 1 ou 2 **caractérisé en ce que** la friction est une friction visqueuse.

5. Moteur électrique selon la revendication précédente **caractérisé en ce que** le composant du matériau d'isolation acoustique est une matière résiliente sous une forme physique permettant la friction par contact mutuel.

6. Moteur électrique selon l'une quelconque des revendications précédentes de 1 à 3 **caractérisé en ce que** le bouclier d'isolation acoustique (12) est un matelas formé par la juxtaposition de paquets, de blocs, de coussins, de coussinets, de bandes épaisses (14) d'un matériau d'isolation acoustique.

7. Moteur électrique selon la revendication précédente **caractérisé en ce que** le matériau d'isolation acoustique est formé à partir de pailles, de fibres, de fils, de filaments, de lanières, de rubans ou de bandelettes métalliques ou toute autre forme plate ou aplatie, l'une ou l'autre de ces formes physiques du métal étant enchevêtrées et comprimées puis conformées en blocs ou en bandes épaisses (14).

8. Moteur électrique selon les revendications précédentes 6 ou 7 **caractérisé en ce que** les blocs sont recouverts d'une enveloppe métallique extérieure (13) composite de maintien, de protection et d'évacuation de la chaleur formée de segments annulaires de tôle montés à chaque fois entre deux anneaux de maintien ou pièces de cerclage (17).

9. Moteur électrique selon la revendication précédente **caractérisé en ce que** l'enveloppe métallique extérieure (13) est fractionnée en plusieurs segments annulaires (15) ou (26) simplement juxtaposés et maintenus par serrage par les pièces de cerclage (17).

10. Moteur électrique selon la revendication précédente **caractérisé en ce que** les pièces de cerclage (17) se poursuivent vers le bas par des prolongations radiales de cloisonnement.

11. Moteur électrique selon la revendication précédente **caractérisé en ce que** le rotor (7) est constitué par un empilement de flans (25) annulaires de tôle fractionné en groupes par les prolongations radiales de cloisonnement (23) des anneaux de cerclage (17).

12. Moteur électrique selon la revendication 10 **caractérisé en ce que** le rotor (7) est constitué par une succession latérale de tronçons ou de segments tubulaires (22).

13. Moteur électrique selon la revendication précédente **caractérisé en ce que** le rotor (7) est constitué par une succession latérale de tronçons ou de segments tubulaires (22) séparés par les prolongations radiales de cloisonnement (23) des anneaux de cerclage (17).

14. Moteur électrique selon la revendication 9 **caractérisé en ce que** les bords longitudinaux des segments annulaires (15) ou (26) de couverture de l'enveloppe extérieure (13) sont relevés.

15. Moteur électrique selon la revendication 9 **caractérisé en ce que** les segments annulaires (15) ou (26) de couverture de l'enveloppe extérieure (13) présentent une forme de section en T dont la branche verticale sert de séparateur entre les blocs, les paquets ou les bandes ou autre forme (14) de conditionnement du matériau d'isolation acoustique.

16. Moteur électrique selon l'une des revendications précédentes 1 ou 2 **caractérisé en ce que** le bouclier périphérique d'isolation acoustique (12) est une structure lamellaire métallique (33) entourant le rotor (7).

17. Moteur électrique selon la revendication précédente **caractérisé en ce que** la structure lamellaire métallique (33) est constituée d'un enroulement de plusieurs tours d'un feuillard (34) dont les spires sont jointives.

18. Moteur électrique selon la revendication 16 **caractérisé en ce que** l'enroulement est formé de plusieurs feuilles ou lames métalliques (35) distinctes et superposées.

19. Moteur électrique selon l'une quelconque des revendications précédentes de 16 à 18 **caractérisé en ce que** le feuillard, les feuilles ou les lames (35) sont maintenus par plusieurs liens périphériques (36).

20. Moteur électrique selon la revendication précédente **caractérisé en ce que** les liens périphériques (36) sont des liens plats du type bandes de cerclage, sangles, ceintures ou analogues.

## Patentansprüche

1. Schallgedämpfter Elektromotor mit einem außerhalb des Stators (1) angeordneten Rotor (7), der von einer äußeren Schalldämmung umgeben ist, **dadurch gekennzeichnet, dass** die äußere Schalldämmung als umgebender Schalldämmschild (12) ausgebildet ist, der die seitliche äußere Fläche (16) der mechanischen Anordnung des Rotors (7) umgibt und sich mit diesem dreht, wobei der Schalldämmschild (12) mit einer äußeren zusammengesetzten metallischen Schutzumhüllung (13) überzogen und aus einer Umkleidung oder einer Matte aus einem Material oder aus einer Struktur gebildet ist, die einstückig oder durch Schichtung von Einheiten ausgebildet ist, wobei das Material oder die Struktur im Zusammenwirken mit den anderen, untereinander nicht verbundenen Teilen des Rotors die mechanisch-akustische Energie zumindest in dem Band hörbarer Frequenzen aufgrund von Reibung in Wärme umwandelt, die durch die außenliegende zusammengesetzte metallische Schutzumhüllung (13) nach außen abgeführt wird, wobei die Schutzumhüllung den Schalldämmschild (12) zu dem Zweck umgibt, diesen zu halten, zu schützen, zu komprimieren und die Wärme abzuführen.

2. Elektromotor nach Anspruch 1, **dadurch gekennzeichnet, dass** die Umwandlung der mechanisch-akustischen Energie in Wärme aufgrund von Reibungsvorgängen erfolgt, die durch Reibung aufgrund von Mikroverschiebungen innerhalb des Schalldämmmaterials oder der Schalldämmstruktur hervorgerufen sind.

3. Elektromotor nach Anspruch 1 oder 2, **dadurch gekennzeichnet, dass** die Reibung eine Trockenreibung ist.

4. Elektromotor nach Anspruch 1 oder 2, **dadurch gekennzeichnet, dass** die Reibung eine viskose Reibung ist.

5. Elektromotor nach Anspruch 4, **dadurch gekennzeichnet, dass** der Bestandteil des Schalldämmmaterials ein nachgiebiges Material ist, das in einer physischen Form vorliegt, die Reibung durch gegenseitigen Kontakt ermöglicht.

6. Elektromotor nach einem der Ansprüche 1 bis 3, **dadurch gekennzeichnet, dass** der Schalldämmschild (12) eine Matte ist, die durch das Schichten von Paketen, Blöcken, Kissen, Füllstücken, dicken Bändern (14) eines Schalldämmmaterials gebildet ist.

7. Elektromotor nach Anspruch 6, **dadurch gekennzeichnet, dass** das Schalldämmmaterial ausgehend von metallischen Spänen, Fasern, Fäden, Filamenten, Riemen, Streifen oder Bändchen oder jeder anderen flachen oder flachgedrückten Form gebildet ist, wobei die jeweiligen physischen Formen des Metalls ineinander verschlungen und komprimiert und anschließend in Form von Blöcken oder dicken Bändern (14) ausgebildet sind.

8. Elektromotor nach Anspruch 6 oder 7, **dadurch gekennzeichnet, dass** die Blöcke mit einer äußeren metallischen Halte-, Schutz- und Wärmeableithülle (13) überzogen sind, die aus ringförmigen Blechsegmenten gebildet ist, die jeweils zwischen zwei Halteringen oder Umreifungsteilen (17) angeordnet sind.

9. Elektromotor nach Anspruch 8, **dadurch gekennzeichnet, dass** die äußere metallische Umhüllung (13) in mehrere ringförmige Segmente (15 oder 26) unterteilt ist, die lediglich in Anlage gebracht und klemmend durch die Umreifungsteile (17) gehalten sind.

10. Elektromotor nach Anspruch 9, **dadurch gekennzeichnet, dass** die Umreifungsteile (17) nach unten durch radiale Unterteilungs-Verlängerungen fortgesetzt sind.

11. Elektromotor nach Anspruch 10, **dadurch gekennzeichnet, dass** der Rotor (7) aus einer Stapelung ringförmiger Blechplatten (25) gebildet ist, die durch die radialen Unterteilungs-Verlängerungen (23) der Umreifungsteile (17) in Gruppen unterteilt sind.

12. Elektromotor nach Anspruch 10, **dadurch gekennzeichnet, dass** der Rotor (7) durch eine seitliche Abfolge von röhrenförmigen Abschnitten oder Segmenten (22) gebildet ist.

13. Elektromotor nach Anspruch 12, **dadurch gekennzeichnet, dass** der Rotor (7) durch eine seitliche Abfolge von röhrenförmigen Abschnitten oder Segmenten (22) gebildet ist, die durch die radialen Unterteilungs-Verlängerungen (23) der Umreifungsteile (17) voneinander getrennt sind.

14. Elektromotor nach Anspruch 9, **dadurch gekennzeichnet, dass** die Längsränder der ringförmigen Segmente (15 oder 26) zum Abdecken der äußeren Umhüllung (13) hochgezogen sind.

15. Elektromotor nach Anspruch 9, **dadurch gekennzeichnet, dass** die ringförmigen Segmente (15 oder 26) zum Abdecken der äußeren Umhüllung (13) im Querschnitt eine T-Form aufweisen, deren vertikaler Schenkel als Trennung zwischen den Blöcken, den Paketen oder den Streifen oder einer anderen Ausbildungsform (14) des Schalldämmmaterials dient.

16. Elektromotor nach Anspruch 1 oder 2, **dadurch gekennzeichnet, dass** der umfängliche Schalldämmschild (12) eine den Rotor (7) umgebende lamellenförmige metallische Struktur ist.

17. Elektromotor nach Anspruch 16, **dadurch gekennzeichnet, dass** die lamellenförmige metallische Struktur (33) aus einer mehrfachen Aufwicklung eines Bandes (34) gebildet ist, dessen Windungen sich berühren.

18. Elektromotor nach Anspruch 16, **dadurch gekennzeichnet, dass** die Aufwicklung durch mehrere getrennte und übereinander angeordnete Metallblätter oder -lamellen (35) gebildet ist.

19. Elektromotor nach einem der Ansprüche 16 bis 18, **dadurch gekennzeichnet, dass** das Metallband, die Metallblätter oder die Metalllamellen (35) durch mehrere umfängliche Verbindungsmittel (36) gehalten sind.

20. Elektromotor nach Anspruch 19, **dadurch gekennzeichnet, dass** die umfänglichen Verbindungsmittel (36) flache Verbindungsmittel vom Typ Umreifungsbänder, Gurte, Ringe oder dergleichen sind.

## Claims

1. An acoustically insulated electric motor of the type having a rotor (7) external to the stator (1) surrounded by an exterior peripheral acoustic insulation **characterized in that** the exterior acoustic insulation is a peripheral acoustic shield (12) surrounding the lateral exterior surface (16) of the mechanical unit of the rotor (7) and rotating with the rotor, said shield (12) of acoustic insulation is covered with an exterior protective composite metal envelope (13) and formed of a jacket or a padding of material or a single unit structure or consisting of juxtaposition of units, a material or a structure in cooperation with other pieces of the rotor which are not interconnected, degenerating mechanical acoustic energy into heat at least in a band of audible frequencies by the transforming mechanical acoustic energy with friction into heat evacuated to an outside through the exterior composite metal protective envelope (13) surrounding the shield (12) for the purposes of maintenance, protection, compression, and heat evacuation.

2. An electric motor according to claim 1 **characterized in that** the transformation of mechanical acoustic energy into heat is effected through frictional contacts following micro-displacements within the core of the material or the structure of the acoustic insulation.

3. An electric motor according to claim 1 or 2 **characterized in that** the friction is a dry friction.

4. An electric motor according to claim 1 or 2 **characterized in that** the friction is a viscous friction.

5. An electric motor according to the preceding claim **characterized in that** the component of the acoustic insulating material is a resilient material in a physical form that allows friction during mutual contact.

6. An electric motor according to any one of preceding claims 1 through 3 **characterized in that** the acoustic insulation shield (12) is a padding formed by the juxtaposition of packets, blocks, pads, cushions, or thick bands (14) of an acoustic insulation material.

7. An electric motor according to the preceding claim **characterized in that** the acoustic insulation material is formed of straws, fibers, threads, filaments, thin strips, ribbons, small metal bands, or any other flat or flattened shape, one or the other of these physical metal shapes being bound together and compressed and then formed into blocks or thick bands (14).

8. An electric motor according to preceding claims 6 or 7 **characterized in that** the blocks are covered by an exterior composite metal envelope (13) for maintenance, protection, and heat evacuation formed of annular metal segments each attached between two maintenance rings or hoops (17).

9. An electric motor according to the preceding claim **characterized in that** the exterior metal envelope (13) is divided into several annular segments (15) or (26) which are simply juxtaposed and maintained by pressure from the hoops (17).

10. An electric motor according to the preceding claim **characterized in that** the hoops (17) extend downward into radial partition extensions.

11. An electric motor according to the preceding claim **characterized in that** the rotor (7) consists of stacked annular metal flanges (25) divided into groups by the radially extending partitions (23) of the hoops (17).

12. An electric motor according to claim 10 **characterized in that** the rotor (7) consists of a lateral succession of tubular portions or segments (22).

13. An electric motor according to the preceding claim **characterized in that** the rotor (7) consists of a lateral succession of tubular portions or segments (22) separated by the radially extending partitions (23) of the hoops (17).

14. An electric motor according to claim 9 **characterized in that** the longitudinal rims of the annular segments (15) or (26) covering the exterior envelope (13) are raised.

15. An electric motor according to claim 9 **characterized in that** the annular segments (15) or (26) covering the exterior envelope (13) are T-shaped, with the vertical branch serving as a separator between blocks, packets, bands, or other shape (14) formed by the acoustic insulation material.

16. An electric motor according to either preceding claim 1 or claim 2 **characterized in that** the peripheral acoustic insulation shield (12) is a plated metal structure (33) surrounding the rotor (7).

17. An electric motor according to the preceding claim **characterized in that** the plated metal structure (33) consists of a metal strip (34) wound several times with the coils of the strip being joined.

18. An electric motor according to claim 16 **characterized in that** the wound strip is formed of several distinct and superimposed sheets or metal plates (35).

19. An electric motor according to any one of preceding claims 16 through 18 **characterized in that** the strip, the sheets or the plates (35) are maintained by several peripheral connectors (36).

20. An electric motor according to the preceding claim **characterized in that** the peripheral connectors (36) are flat connectors such as hoops, straps, belts, or the like.
